# EUROPÄISCHE PATENTSCHRIFT

(11) **EP 0 856 665 B1**
(45) Veröffentlichungstag und Bekanntmachung des Hinweises auf die Patenterteilung: **15.05.2002**
(21) Anmeldenummer: 98100767.7
(22) Anmeldetag: 17.01.1998
(51) Int. Cl.: F04D 3/00, F04D 7/00

(54) **Axialförderer, vorzugsweise mit Begasungselement, und Schlaufenreaktor, diesen enthaltend**
Axial conveyor, preferably with aeration element, and loop reactor provided with such conveyor
Convoyeur axial, préférablement avec élément d'aération, et réacteur à boucle en étant équipé

(30) Priorität: 31.01.1997 DE 19703551
(43) Veröffentlichungstag der Anmeldung: 05.08.1998
(73) Patentinhaber: BAYER AG, 51368 Leverkusen (DE)
(72) Erfinder: Judat, Helmut, Dr., 40764 Langenfeld (DE); Hemmerle, Wolfgang, 51377 Leverkusen (DE); Rose, Reinhold, 51371 Leverkusen (DE)

(56) Entgegenhaltungen:
- EP-A- 0 480 501
- DE-A- 4 322 824
- DE-A- 4 327 727
- FR-A- 2 697 870

## Beschreibung

Die vorliegende Erfindung betrifft einen insbesondere für die Förderung von Flüssigkeits/Gas-Dispersionen geeigneten Axialförderer, vorzugsweise mit selbstansaugendem Begasungsrührer, und einen diesen enthaltenden Schlaufenreaktor.

Axialförderer weisen im allgemeinen innerhalb eines Rohrabschnitt-förmigen Förderkanals eine antreibbare Achse mit schräg angestellten, wandgängigen Förderschaufeln oder -schnecken auf. Bei der Förderung mittels Axialförderern bildet sich in Förderrichtung unterhalb der Schaufeln oder Schnecken eine Druckzone und oberhalb eine Saugzone aus. Der dadurch gebildete Druckgradient im Spalt zwischen Förderrohr (Gehäuse) und Schaufeln bzw. Schnecken bewirkt eine Rückströmung des zu fördernden Mediums. Im Falle der Förderung von Flüssigkeits/Gas-Dispersionen kommt es zur Separation von Gasblasen durch den Spalt und damit zum Abfall der Förderleistung. Der Effekt wird noch dadurch verstärkt, daß der durch Rotation der Schnecke oder den Schaufeln der Flüssigkeit aufgeprägte Drehimpuls durch die Wandreibung gebremst wird, so daß die Gasblasen in Wandnähe zur Wand hin segregieren und an der Wand koaleszieren. Im Falle höherer Gasgehalte führt dies zum Zusammenbruch der Förderleistung.

Axialförderer sind daher nur für die Förderung von Flüssigkeits/Gas-Dispersionen mit Gasgehalten bis zu 5 Vol.-% geeignet.

FR-A-2 697 870 beschreibt einen Axialförderer mit geringer Förderleistung zur Förderung von Gas/Flüssigkeits-Zweiphasen-Gemischen. Der Axialförderer besteht aus einer rotierenden Achse, auf der Laufräder angeordnet sind, deren radiale Ausdehnung begrenzt ist, und einem nicht rotierenden Förderrohr, das die rotierende Achse mit den darauf befestigten Laufrädern umschließt. An den äußeren Enden der Laufräder ist eine mit den Laufrädern fest verbundene, ebenfalls rotierende zylindrische Verkleidung angebracht, um zu verhindern, dass das Zweiphasengemisch aus den Laufrädern in radialer Richtung in das zwischen dem Förderrohr und den Laufrädern bestehende Spiel herausgestoßen wird, was zur Phasentrennung des Gemisches und zu einem Verlust der Leistungsfähigkeit der Laufräder führen würde. Die zylindrische Verkleidung reicht über die gesamte Länge der Laufräder, so dass kein zu förderndes Material, das sich zwischen den Laufrädern und innerhalb der zylindrischen Verkleidung befindet, in den Spalt (das Spiel) zwischen Laufrädern und Förderrohr gelangen kann. Somit besteht kein Kontakt zwischen dem zu fördernden Material, das sich zwischen den Laufrädern befindet und dem nicht rotierenden Förderrohr.

Es wurde nun gefunden, daß Axialförderer zur Förderung von Flüssigkeits/Gas-Dispersionen sehr gut geeignet sind, wenn die Förderelemente des Axialförderers auf der Druckseite ein wandgängiges Bord aufweisen. Der Bord hat die Wirkung, daß einerseits die Druckdifferenz am Gehäusespalt herabgesetzt wird; ferner, daß der Druckabfall über die Ausdehnung des Bordes in axialer Richtung erfolgt, also der Druckgradient herabgesetzt wird; die auf der Druckseite radial nach außen gerichtete Strömungskomponente vor Erreichen des Gehäusespaltes in Förderrichtung abgelenkt wird, so daß eine Gasblasen-Separation über den Spalt erschwert wird; und ferner der Drehimpuls der Flüssigkeit auf der Innenseite des Bordes am größten ist, so daß die Gasblasen relativ zur Flüssigkeit eine Kraft von der Wand weg erfahren.

Gegenstand der vorliegenden Erfindung ist demgemäß eine Axialförderpumpe, insbesondere zum Fördern von Flüssigkeits/Gas-Suspensionen, enthaltend auf einer antreibbaren Achse angeordnete Propeller-, Schaufel- oder Schnecken-förmige Förderelemente in einem Rohrabschnitt-förmigen Gehäuse, wobei die Förderelemente auf der Druckseite einen Bord aufweisen.

Die relative Höhe des Bordes - bezogen auf den Durchmesser des Förderorgans - soll mindestens 0,025, bevorzugt 0,05, insbesondere bevorzugt 0,075 betragen. Die relative Höhe des Bordes - bezogen auf den Durchmesser des Förderorgans - braucht 0,25 nicht zu überschreiten. Bevorzugt liegt die relative Höhe unterhalb von 0,2, insbesondere bevorzugt unterhalb 0,15.

Werden als Förderelemente Propeller oder Kaplanpropeller eingesetzt, ist eine Blattzahl zwischen zwei und fünf bevorzugt. Der Anstellwinkel der Propeller bzw. Kaplanpropeller kann zwischen 5 und 40° liegen.

Vorzugsweise überdecken die Propeller zusammen mindestens 60 %, insbesondere bevorzugt mindestens 80 %, der durch ihren Außendurchmesser definierten Kreisfläche.

Schnecken als Förderelemente werden vorzugsweise ein- bis vier-gängig ausgebildet.

Die Steigung der Schnecke, d. h. der relative Hub, - bezogen auf den Durchmesser - beträgt bevorzugt 0,2 bis 0,9.

Eine befriedigende drehzahlabhängige Förderleistung des erfindungsgemäßen Axialförderers wird erzielt, wenn der Anstellwinkel der Förderelemente und die Höhe des Bordes auf den Förderquerschnitt, die Viskosität und den Gasblasengehalt des zu fördernden Mediums abgestimmt sind.

Aufgrund der quasi elastischen Eigenschaften des zu fördernden Mediums (wegen des dispergierten Gases) neigt der Axialförderer aber außerhalb gewisser Grenzen für die genannten Parameter zu Instabilitäten der Strömungsführung, insbesondere quer zur Förderrichtung, die auch im nicht koaleszierenden Stoffsystem zur Koaleszenz der Gasblasen auch in Achsennähe mit Rückwirkung auf die Förderleistung führen kann.

Es wurde nun weiter gefunden, daß diese Instabilitäten vermieden werden können, wenn auf der Druckseite des Axialförderers in Achsennähe des Rohrabschnitts ein Sog erzeugt wird. Dies kann durch ein auf der Druckseite des Axialförderers angeordnetes zusätzliches Förderorgan erfolgen, dessen Förderquerschnitt 1/3 bis 2/3, bevorzugt etwa die Hälfte, des Rohrabschnittsquerschnitts bemißt. An das zusätzliche Förderorgan sind keine besonderen Anforderungen zu stellen. Beispielsweise kann dies ein einfacher Balkenrührer sein, der auf der verlängerten Achse des Axialförderers angeordnet ist und dessen Radius das 0,55- bis 0,82-fache, vorzugsweise etwa 0,7-fache, des Rohrabschnittsradius beträgt. Der Anstellwinkel des zusätzlichen Förderorgans beträgt vorzugsweise das 1,5-fache bis 2,5-fache des Anstellwinkels der Förderelemente des Axialförderers, jedoch nicht mehr als 75°.

Der Abstand des zusätzlichen Förderorgans von dem Axialförderer wird vorzugsweise so bemessen, daß eine Rückwirkung des von dem zusätzlichen Förderorgan erzeugten Wirbels mit axialer Vorwärtsströmung und peripherer Rückströmung in dem Rohrabschnitt vermieden wird. Vorzugsweise entspricht der Abstand des zusätzlichen Förderorgangs von dem Austrittsende des Axialförderers mindestens dem Durchmesser des Rohrabschnitts, insbesondere bevorzugt dem 1,5- bis 3-fachen des Rohrabschnittsdurchmessers.

Nach einer weiteren Ausführungsform der Erfindung ist das zusätzliche Förderorgan als Begasungsrührer ausgebildet. Dabei weist die gemeinsame Achse von Axialförderer und zusätzlichem Förderorgan eine axiale Bohrung auf, die in die ebenfalls hohl ausgebildeten Förderelemente des zusätzlichen Förderorgangs mündet.

Das Gas zur Begasung wird in an sich bekannter Weise, vorzugsweise selbst angesaugt, über geeignete Einleitorgane in die Achse eingeleitet und durch am Umfang des zusätzlichen Förderorgangs vorgesehene Austrittsöffnungen in der Flüssigkeits/Gas-Dispersion verteilt.

Der erfindungsgemäße Axialförderer ist insbesondere als Förderorgan in Schlaufenreaktoren, in denen in flüssiger Phase Reaktionen mit oder unter Freisetzung von Gasen stattfinden, wie z.B. in Fermentern, oder bei Direktreaktionen mit Sauerstoff, Wasserstoff, Chlor oder anderen, in dem flüssigen Medium nicht vollständig gelösten Gasen, geeignet, gegebenenfalls in Gegenwart von Feststoffen, wie feinteiligen Katalysatoren (Schlammphasenreaktionen).

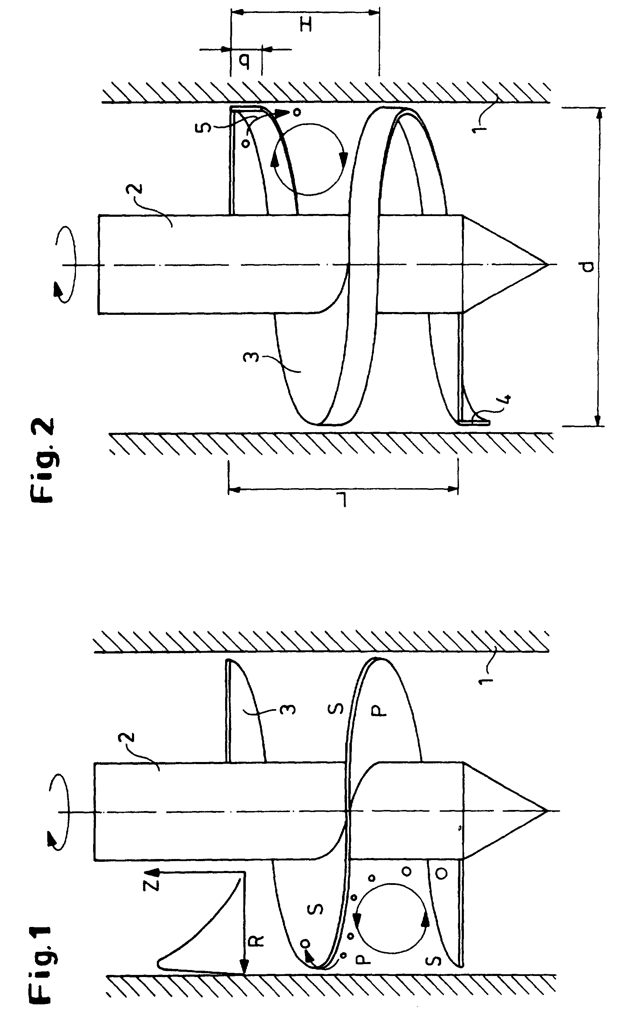

Die Erfindung wird nachfolgend anhand der Figuren 1 bis 5 näher erläutert:
Fig. 1 zeigt einen Schneckenförderer nach dem Stand der Technik. Dieser besteht aus einem zylindrischen Gehäuse 1, mit einer darin angeordneten zur Rotation antreibbaren Achse 2, auf der eine Schnecke 3 angeordnet ist. Die Flüssigkeits/Gas-Dispersion wird nach unten gefördert, wobei unterhalb der Schnecke die Druckzone P und oberhalb der Schnecke die Saugzone S ausgebildet wird. Der Förderung in axialer Richtung ist eine Rotation um die Achse überlagert. Dieser Schrauben-förmigen Förderbewegung ist ferner eine durch den mit Pfeilen versehenen Kreis angedeutete Walzenbewegung überlagert, die in der Druckzone P das Fördermedium nach außen und in der Saugzone S das Fördermedium zur Achse hin fördert. Im Spalt zwischen Schnecke 3 und Gehäuse 1 kommt es aufgrund des zwischen Druck- und Saugseite herrschenden Druckgradienten zur Separation der dispergierten Gasblasen. Ferner ist qualitativ die aufgrund der Rotation auf die Flüssigkeit wirkende Zentrifügalkraft Z in Abhängigkeit vom Radius R dargestellt.
Fig. 2 zeigt einen erfindungsgemäßen Axialförderer, wobei die Schnecke 3 auf der Druckseite einen umlaufenden Bord 4 aufweist. Die dargestellte eingängige Schnecke weist eine Steigung von H/d = 0,485 und eine relative Länge von L/d = 0,75 auf. Die relative Höhe des Bordes 4 beträgt b/d = 0,1. Wie durch den Pfeil 5 angedeutet, wird die auf der Druckseite radial nach außen gerichtete Strömungskomponente durch den Bord 4 in Förderrichtung umgelenkt, so daß die darin enthaltenen Gasblasen nicht mehr von dem durch den Bord 4 herabgesetzten Druckgradienten zwischen Ober- und Unterseite der Schnecke 3 separiert werden.

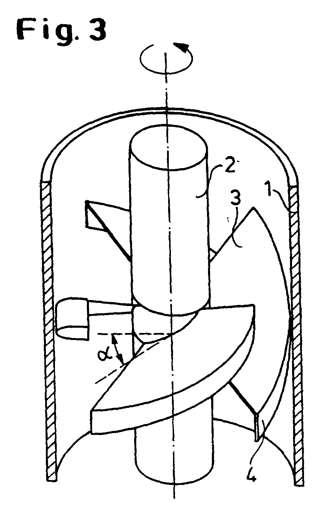

Fig. 3 zeigt einen erfindungsgemäßen Kaplanpropeller mit vier Schaufeln 3, deren Anstellwinkel α 30° beträgt. Die Schaufeln 3 überdecken (mit Ausnahme des Spaltes zum Gehäuse) den gesamten Querschnitt des Förderrohres 1.

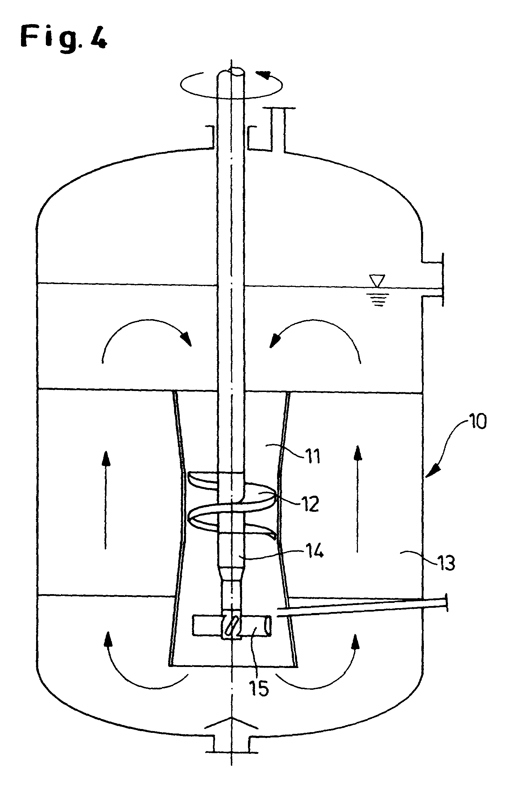

Fig. 4 zeigt einen Schlaufenreaktor 10 mit einem zentralen Strömungsrohr 11, in dem sich ein erfindungsgemäßes Axialförderorgan 12 befindet. In dem Schlaufenreaktor wird eine Gas/Flüssigkeits-Dispersion entsprechend den dargestellten Pfeilen umgepumpt. Das zentrale Leitrohr 11 wird durch radiale Leitbleche 13 gehalten, wobei die Leitbleche gleichzeitig die durch den Förderer 12 aufgeprägte rotierende Strömung behindern. Der Axialförderer 12 weist ein auf der Achse 14 starr mit diesem verbundenes zusätzliches Förderorgan 15, dessen Radius nur einen Teil des Querschnitts des Leitrohres 11 überdeckt, auf.

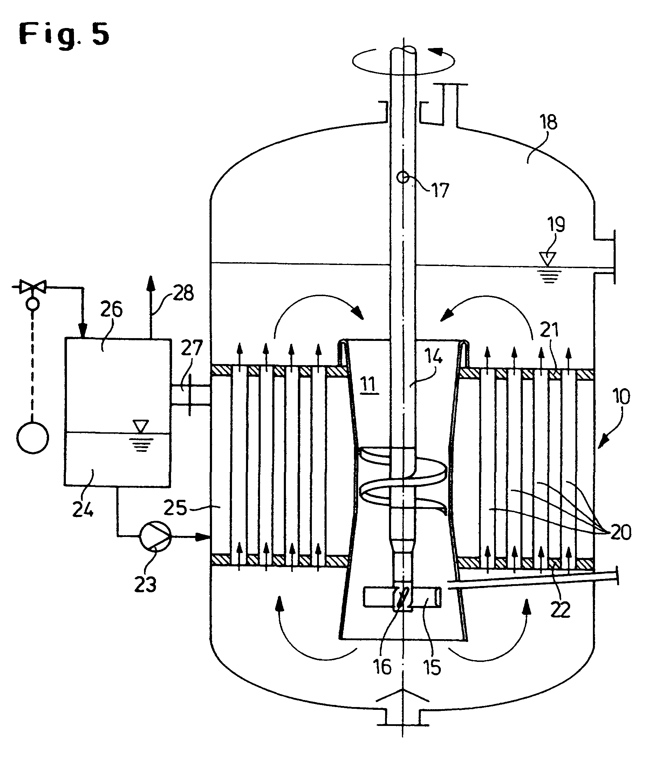

Fig. 5 zeigt einen Schlaufenreaktor 10, bei dem das zusätzliche Förderorgan 15 als selbstansaugender Begasungsrührer ausgebildet ist. Das Begasungsmittel wird aus dem Gasraum 18 oberhalb des Flüssigkeitsspiegels 19 durch entsprechende Ansaugöffnungen 17 der hohl ausgebildeten Achse 14 des Förderorgans angesaugt und mittels der hohl ausgebildeten und mit der Ansaugöffnung 17 kommunizierenden Rührerarme 15 in der Flüssigkeit fein verteilt. Ferner erfolgt die Rückströmung der Gas-/Flüssigkeits-Dispersion durch Wärmeaustauschrohre 20, die durch Rohrböden 21 und 22 gehalten werden.

Innerhalb des Leitrohres 11 können strömungslenkende Einbauten (nicht dargestellt) angebracht sein, die die Rotation der Gas/Flüssigkeits-Dispersion behindern.

Der Wärmeaustausch erfolgt in dieser Ausführungsform mittels einer Wärmeaustauschflüssigkeit, die mittels einer Pumpe 23 aus dem Sumpf 24 des Abscheiders 26 in den Zwischenraum 25 zwischen den Wärmeaustauschrohren 20 gefördert wird und dort verdampft. Das Dampf/Flüssigkeits-Gemisch gelangt durch den Stutzen 27 in den Abscheider 26, wo der Dampf sich von der Flüssigkeit trennt und durch Leitung 28 abgezogen werden kann. Mit der Verdampfungskühlung können sehr große Wärmemengen abgeführt werden.

## Patentansprüche

1. Axialförderer (12), insbesondere zum Fördern von Gas/Flüssigkeits-Dispersionen, enthaltend in einem im wesentlichen zylindrischen Förderrohr (1; 11) auf einer antreibbaren Achse (2) angeordnete Propeller-, Schaufel- oder Schnecken-förmige Förderelemente (3), **dadurch gekennzeichnet, dass** die Förderelemente (3) einen wandgängigen Bord (4) aufweisen ,
der in Richtung auf die Druckseite der Förderelemente (3) weist, und
wobei die Höhe (b) des Bordes (4) - bezogen auf den Durchmesser (d) des Förderrohres (1; 11) - 0,025 bis 0,25 beträgt.

2. Axialförderer (12) nach Anspruch 1, wobei druckseitig auf der Achse (2) des Förderers (12) ein zusätzliches Förderorgan (15) vorgesehen ist, wobei das zusätzliche Förderorgan (15) lediglich über einen Teil des Querschnitts des Förderrohres (1; 11) wirksam ist.

3. Axialförderer (12) nach Anspruch 2, wobei das zusätzliche Förderorgan (15) als Begasungsrührer ausgebildet ist.

4. Verfahren zum Fördern von Gas/Flüssigkeits-Dispersionen, **dadurch gekennzeichnet, daß** ein Axialförderer (12) gemäß einem der Ansprüche 1 bis 3 eingesetzt wird.

5. Schlaufenreaktor (10), enthaltend als zentrales Umwälzorgan einen Axialförderer (12) gemäß den Ansprüchen 1 bis 3.

6. Verfahren zur Durchführung von chemischen Reaktionen mit direkter Umsetzung eines Gases in einer Flüssigkeit, gegebenenfalls in Gegenwart feinteiliger Feststoffe, **dadurch gekennzeichnet, daß** ein Schlaufenreaktor (10) gemäß Anspruch 5 eingesetzt wird.

## Claims

1. An axial conveyor (12), particularly for the conveying of gas/liquid dispersions, containing conveying elements (3) in the form of propellers, blades or endless screws which are disposed on a shaft (2) which can be driven in a substantially cylindrical conveying tube (1; 11), **characterised in that** the conveying elements (3) comprise a rim (4) which runs at the wall and which points towards the pressure side of the conveying elements (3), wherein the height (b) of the rim (4) is 0.025 to 0.25 times the diameter (d) of the conveying tube (1; 11).

2. An axial conveyor (12) according to claim 1, wherein an additional conveying element (15) is provided on the shaft (2) of the conveyor (12) on the pressure side, wherein the additional conveying element (15) is effective over part of the cross section of the conveying tube (1; 11) only.

3. An axial conveyor (12) according to claim 2, wherein the additional conveying element (15) is constructed as a gasification agitator.

4. A method of conveying gas/liquid dispersions, **characterised in that** an axial conveyor (12) according to any one of claims 1 to 3 is used.

5. A loop-type bubble column (10) containing an axial conveyor (12) according to claims 1 to 3 as a central circulating element.

6. A method of conducting chemical reactions with direct conversion of a gas in a liquid, optionally in the presence of finely divided solids, **characterised in that** a loop-type bubble column (10) according to claim 5 is used.

## Revendications

1. Convoyeur axial (12), en particulier pour le convoyage de dispersions de liquide/gaz, comportant des éléments de convoyage (3) en forme d'hélice, d'aube ou de vis agencés sur un axe (2) susceptible d'être entraîné dans un tube de convoyage (1 ; 11) sensiblement cylindrique, **caractérisé en ce que** les éléments de convoyage (3) comprennent un rebord côté paroi (4) qui est orienté en direction du côté pression des éléments de convoyage (3), et dans lequel le rapport de la hauteur (b) du rebord (4) au diamètre (d) du tube de convoyage (1; 11) est de 0,025 à 0,25.

2. Convoyeur axial (12) selon la revendication 1, dans lequel est prévu du côté pression un organe de convoyage supplémentaire (15) sur l'axe (2) du convoyeur (12), l'organe de convoyage supplémentaire (15) agissant seulement sur une partie de la section du tube de convoyage (1 ; 11).

3. Convoyeur axial (12) selon la revendication 2, dans lequel l'organe de convoyage supplémentaire (15) est réalisé sous forme d'un agitateur pour l'absorption de gaz.

4. Procédé pour convoyer des dispersions de gaz/liquide, **caractérisé en ce que** l'on utilise un convoyeur axial (12) selon l'une quelconque des revendications 1 à 3.

5. Réacteur à boucles (10), comportant un convoyeur axial (12) selon les revendications 1 à 3 à titre d'organe de recirculation central.

6. Procédé pour réaliser des réactions chimiques avec transformation directe d'un gaz en un liquide, le cas échéant en présence de particules solides fines, **caractérisé en ce que** l'on utilise un réacteur à boucles (10) selon la revendication 5.
